(19) Europäisches Patentamt / European Patent Office / Office européen des brevets

(11) **EP 4 286 973 A1**

(12) **EUROPÄISCHE PATENTANMELDUNG**

(43) Veröffentlichungstag:
**06.12.2023 Patentblatt 2023/49**

(21) Anmeldenummer: **22177019.1**

(22) Anmeldetag: **02.06.2022**

(51) Internationale Patentklassifikation (IPC):
***G05D 1/02*** *(2020.01)*

(52) Gemeinsame Patentklassifikation (CPC):
**G05D 1/0077; G05D 1/0246;** G05D 2201/0216

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Arzich, Martin**
  **90475 Nürnberg (DE)**

• **Graf, Rene**
  **90513 Zirndorf (DE)**
• **Kahabka, Thomas**
  **91224 Pommelsbrunn (DE)**
• **Kilian, Lennart**
  **82131 Gauting (DE)**
• **Walter, Maximilian**
  **90408 Nürnberg (DE)**

(74) Vertreter: **Siemens Patent Attorneys**
**Postfach 22 16 34**
**80506 München (DE)**

(54) **VERFAHREN, SOFTWAREPROGRAMMPRODUKT UND VORRICHTUNG ZUR SICHERHEITSGERICHTETEN GESCHWINDIGKEITSÜBERWACHUNG EINER AUTONOMEN BEWEGUNGSEINHEIT**

(57) Die Erfindung betrifft ein Verfahren zur sicherheitsgerichteten Geschwindigkeitsüberwachung einer autonomen Bewegungseinheit, sowie ein Softwareprogrammprodukt und eine Vorrichtung.

Es wird eine Lösung zur sicheren Ermittlung der Geschwindigkeit einer autonomen Bewegungseinrichtung AMR vorgeschlagen, die ohne zusätzliche spezielle Hardware auskommt. Bei der vorgeschlagenen Lösung werden lediglich Komponenten verwendet, die für den Einsatz eines AMRs ohnehin notwendig sind. Diese Komponenten, bzw. die von den Komponenten ermittelten Daten, werden nun geeignet miteinander kombiniert, mit Hilfe der programmierbaren Steuerung, auf der entsprechende Software, sodass insgesamt eine sichere Ermittlung der aktuellen Geschwindigkeit möglich ist, und zwar ohne zusätzlichen Hardware-Einsatz.

FIG 1

EP 4 286 973 A1

**Beschreibung**

Die Erfindung betrifft ein Verfahren zur sicherheitsgerichteten Geschwindigkeitsüberwachung einer autonomen Bewegungseinheit, sowie ein Softwareprogrammprodukt und eine Vorrichtung.

Autonome Bewegungseinheiten, beispielsweise autonome mobile Roboter, kurz AMR, und andere fahrerlose Fahrzeuge wie Gabelstapler werden auch im industriellen Umfeld immer stärker für den Materialtransport eingesetzt. Die Typ-C-Normen ISO 3691-4:2020 (Flurförderzeuge - Sicherheitstechnische Anforderungen und Verifizierung - Teil 4: Fahrerlose Flurförderzeuge und ihre Systeme) und EN 1525:1997 (Sicherheit von Flurförderzeugen - Fahrerlose Flurförderzeuge und ihre Systeme) machen dabei Vorgaben, die den Personenschutz von in dem Umfeld tätigen Personen gewährleisten sollen. Immer häufiger werden bei der Realisierung von Sicherheitseinrichtung auch sogenannte sicherheitsgerichtet Steuerungen (SSPS oder F-SPS) eingesetzt. Sicherheitsgerichtet, oder auch fehlersicher, bedeutet, dass in einem Bereich eine Person sicher erkannt wird und beim Betreten des Bereichs durch diese Person das Fahrzeug sicher abgeschaltet wird.

Üblicherweise werden für den Personenschutz sicherheitsgerichtete Laserscanner verwendet, welche durch eine sicherheitsgerichtete Steuereinheit mit den Not-Halt-Schaltern und den Aktoren verbunden sind.

Die Überwachungsfelder solcher sicherheitsgerichteten Laserscanner sind dabei oft statisch, was zu einer Beschränkung der maximalen Geschwindigkeit führt. Eine adaptive Umschaltung der Größe der Überwachungsfelder in Abhängigkeit der Geschwindigkeit und Richtung des Fahrzeugs ist auch möglich.

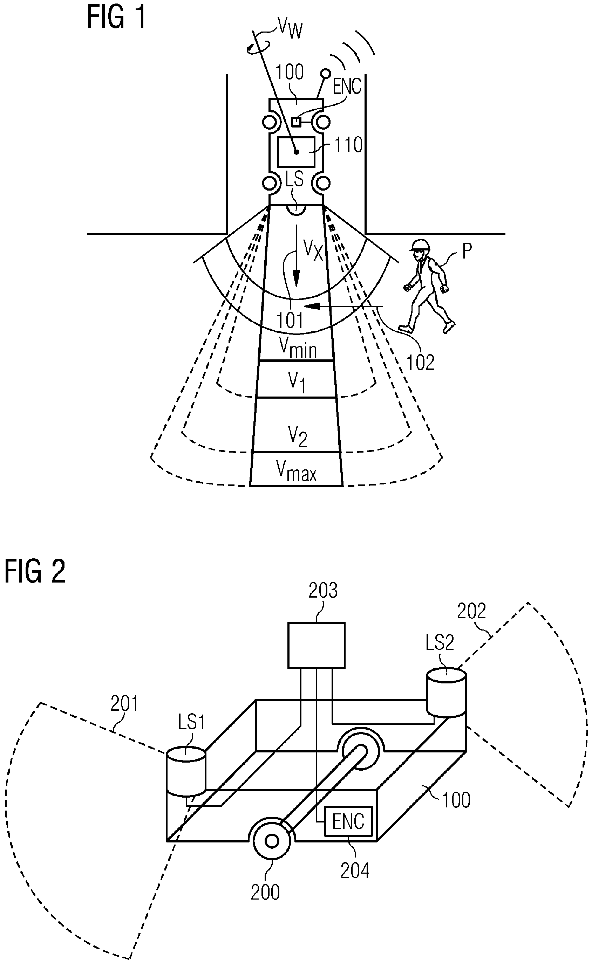

Figur 1 zeigt ein Szenario mit einer Autonomen Bewegungseinheit (100), welche über eine sicherheitsgerichtete Steuerung, 110 verfügt, sowie über einen optischen Sensor LS. Die autonome Bewegungseinrichtung 100 bewegt sich dabei in verschiedene Bewegungsrichtungen, je nach Antriebsart, Vx zeigt nach vorne, dargestellt sind dabei die minimale Geschwindigkeit Vmin, maximale Geschwindiget Vmax, und Geschwindigkeiten V1, V2, welche sich dazwischen befinden. Die Drehgeschwindigkeit Vw lässt die Bewegungseinrichtung auch in weiteren Richtungen drehen und muss bei der weiteren Betrachtung ebenfalls berücksichtigt werden. Ein Encoder ENC überwacht dabei die Bewegung der Räder, man versteht darunter einen Kodierer zur Signalbildung aus Bewegungen, dieser arbeitet in der Regel optisch, magnetisch oder mechanisch mit Kontakten. Es sind Messwertgeber oder Eingabegeräte, welche die aktuelle Position einer Welle oder einer Antriebseinheit erkennen und als elektrisches Signal ausgeben. Es werden zwei Arten von Kodierern unterschieden: Rotatorische Geber, auch Drehgeber genannt, werden an rotierenden Bauteilen montiert, zum Beispiel auf einer Motorwelle. Lineare Kodierer werden typischerweise an Bauteile mit geraden Bewegungen montiert.

Verhindert werden soll nun, dass eine Person (oder ein weiteres Fahrzeug) P sich in den Sicherheitsbereich der Bewegungseinrichtung 100 bewegt, mit einer eigenen Geschwindigkeit 102.

Für Fahrzeuge mit Differentialantrieb (zwei Antriebe) oder einer Kinematik mit nur einer Lenk- und Drehachse, wie bei Gabelstaplern üblich, ist der Berechnungsaufwand der sicherheitsgerichteten Geschwindigkeit unproblematisch.

Der Berechnungsaufwand im sicherheitsgerichteten Teil einer programmierbaren Logik steigt jedoch bei Fahrzeugen mit omnidirektionalen Antrieben wie z. B. einem Mechanumantrieb, also einem Fahrzeug, das mit Mechanum-Rädern ausgestattet ist.

Der Geschwindigkeitsvektor Vx, Vy und die Rotation W ist abhängig von den Einzelgeschwindigkeiten der Räder V1, V2, V3 und V4. R steht dabei für den Radius der Mechanumräder. Folgende Formel veranschaulicht die Berechnung der Vorwärtskinematik:

$$(v_x, v_y, \omega)^{\mathrm{T}} = \begin{pmatrix} \sin\phi & -\sin\phi & -\sin\phi & \sin\phi \\ -\cos\phi & -\cos\phi & \cos\phi & \cos\phi \\ \frac{1}{4R} & \frac{1}{4R} & \frac{1}{4R} & \frac{1}{4R} \end{pmatrix} (v_1, v_2, v_3, v_4)^{\mathrm{T}}$$

Neben dem erhöhten Berechnungsaufwand, welcher auf einer sicherheitsgerichteten Steuerung rechen- und damit kostenintensiv ist, werden an jeder der vier Achsen jeweils ein sicherheitsgerichteter Encoder benötigt. Diese benötigen entsprechend Platz und eine sicherheitsgerichtete Verbindung zur sicherheitsgerichteten Steuerung.

Fehler wie Schlupf der Räder können nicht ausgeschlossen werden. Das bedeutet, dass ein Fehler durch beispielsweise das Weiterrutschen beim Bremsen oder Durchdrehen der Räder beim Beschleunigen trotz sicherheitsgerichteter Encoder nicht ausgeschlossen werden kann.

Bisher werden sicherheitsgerichtete Encoder an den Achsen des Fahrzeugs verwendet. Die Drehgeschwindigkeit wird durch eine sicherheitsgerichtete Recheneinheit (F-PLC) ausgewertet, sodass die Berechnung der Vorwärtskinematik erfolgen kann. In Abhängigkeit der Geschwindigkeit und der Fahrtrichtung können dann die Felder der Laserscanner geschalten werden, um Kollisionen mit Personen zu vermeiden.

Es werden dazu bereits sicherheitsgerichtete Steuerungen und sicherheitsgerichtete Encoder angeboten, sodass die Geschwindigkeit und die Richtung berechnet und die Überwachungsfelder entsprechend geschalten werden können. Dabei ist der Typ der Kinematik aber nicht frei definierbar, sondern nur für die gängigen Kinematiken wie z. B. Differentialkinematik verfügbar.

Ein beispielhafter Aufbau ist der Figur 2 zu entnehmen, mit einer sicherheitsgerichteten Steuerung 203. Sicherheitsgerichtete Encoder ENC überwachen die Bewegung des Antriebs 200. Optische Sensoren LS1, LS2 überwachen ein Überwachungsfeld 201, 202 jeweils in den Fahrtrichtungen der autonomen Bewegungseinrichtung. Es kann sich hier um Laser-Scanner, Lidar, Kameras in 1D, 2D, 3D oder ähnliches handeln. Nicht dargestellt in der Figur 2 sind an der Bewegungseinrichtung weiters angebrachte Not-Halt Knöpfe, die es ermöglichen, manuell einen Not-Halt auszulösen.

Es ist daher Aufgabe der Erfindung, eine normgerechte Umsetzung der sicherheitsgerichteten Geschwindigkeitserkennung von komplexeren Fahrzeugen durchzuführen. Dabei soll der Rechenaufwand für die sicherheitsgerichtete Berechnung minimiert werden.

Die Aufgabe wird daher gelöst durch ein Verfahren mit den Merkmalen des unabhängigen Patentanspruchs 1. Die Aufgabe wird weiterhin gelöst durch ein Computerprogrammprodukt zur Durchführung der Schritte eines Verfahrens gemäß den Merkmalen eines der Patentansprüche 1 bis 16. Die Aufgabe wird ebenfalls gelöst durch eine Vorrichtung gemäß den Merkmalen des Patentanspruchs 17.

Das beanspruchte Verfahren zur sicherheitsgerichteten Geschwindigkeitsüberwachung einer autonomen Bewegungseinheit mit zumindest einer Fortbewegungseinrichtung mit einem Bewegungs-Erfassungssystem (Encoder) und zumindest einem an der autonomen Bewegungseinheit befindlichen Umgebungs-Erfassungssystem (Kamera, Laser Scanner, Lidar, oder vergleichbares), mit folgenden Schritten:

- mittels eines ersten Verfahrens wird aus ersten Daten der Bewegungseinheit, auf Basis von Messwerten des Bewegungs-Erfassungssystems ein erster Bewegungsvektor ermittelt,
- mittels eines zweiten Verfahrens (302) wird aus zweiten Daten, auf Basis von Messwerten des Umgebungs-Erfassungssystems ein zweiter Bewegungsvektor der Bewegungseinheit ermittelt, und
- eine Prüfung des ersten und zweiten Bewegungsvektors mittels Kreuzvergleich erfolgt und als Ergebnis eine Aussage über die Gültigkeit sowie ein als sicherheitsgerichtet geltender Bewegungsvektor ausgegeben wird.

Die Aufgabe wird weiterhin gelöst durch eine Vorrichtung zur sicherheitsgerichteten Geschwindigkeitsüberwachung einer autonomen Bewegungseinheit mit

- zumindest einer Fortbewegungseinrichtung mit einem Bewegungs-Erfassungssystem (Encoder) wobei auf Basis von Messwerten des Bewegungs-Erfassungssystems ein erster Bewegungsvektor ermittelbar ist und
- zumindest einem an der autonomen Bewegungseinheit befindlichen Umgebungs-Erfassungssystem, wobei aus zweiten Daten, auf Basis von Messwerten des Umgebungs-Erfassungssystems ein zweiter Bewegungsvektor der Bewegungseinheit ermittelbar ist, und
- mit einer Diagnose-Einheit zur Prüfung der ersten und zweiten Daten
- einer programmierbaren Steuerung zur Durchführung einer Prüfung des ersten und zweiten Bewegungsvektors mittels Kreuzvergleich und

zum Treffen von sicherheitsgerichteten Entscheidungen für die Bewegungseinheit auf Basis eines von der Diagnose-Einheit erhaltenen Prüfungsergebnisses, wobei
als Ergebnis eine Aussage über die Gültigkeit sowie ein als sicherheitsgerichtet geltender Bewegungsvektor ausgebbar ist.

Weitere vorteilhafte Ausführungsbeispiele der Erfindung werden in den Unteransprüchen beschrieben.

Die Erfindung wird außerdem durch die Figuren bildlich näher dargestellt, dabei zeigt

Figur 1 einen beispielhaften Anwendungsfall mit einem AMR,
Figur 2 einen beispielhaften Aufbau eines bekannten AMR,
Figur 3 einen Überblick über das erfindungsgemäße Verfahren
Figur 4 die Plausibilitätsprüfung des erfindungsgemäßen Verfahrens,
Figur 5 das Verfahren mit Dynamisierung des Koordinatensystems, und
Figur 6 das Verfahren und der Sonderfall Sicheres Anfahren nach Stillstand.

Es wird eine Lösung zur sicheren Ermittlung der Geschwindigkeit einer autonomen Bewegungseinrichtung AMR vorgeschlagen, die ohne zusätzliche spezielle Hardware auskommt. Bei der vorgeschlagenen Lösung werden lediglich Komponenten verwendet, die für den Einsatz eines AMRs ohnehin notwendig sind. Dazu gehören:

- Eine programmierbare Steuerung (SPS, Programmable Logic Controller PLC) die sicherheitsgerichtete Entscheidungen treffen kann. Diese ist ohnehin zur sicheren Stillsetzung des AMR nötig, um z. B. die Kollision mit einem Hindernis zu vermeiden.
- Ein optisches System / optischer Sensor zum Abtasten von Hindernissen. Ein solches System ist heute üblicherweise in AMR vorhanden, um im Rahmen der Navigation die Position im Raum (nicht-sicherheitsgerichtet) zu bestimmen. Der optischen Sensor kann eine eindimensionale, zweidimensionale oder dreidimensionale Erfassung durchführen.

Hierunter fallen beispielsweise alle Arten von Kamera, Stereo-Kamera (2D, 3D), einen insbesondere beweglich montierten Laser Scanner oder auch Lidar, die bei der Erkennung eine sogenannte Punktwolke erzeugen.

- Ein System zur Messung der Bewegung der Räder des AMRs (Odometrie). Hierunter fallen auch die genannten Encoder. Dieses System wird zur (nicht-sicherheitsgerichteten) Regelung der Antriebe ohnehin benötigt.

Es gibt noch weitere Möglichkeiten, die Geschwindigkeit eines Fahrzeugs zu bestimmen, z. B.:

- Berechnung der Geschwindigkeit durch visuelle Odometrie einer auf einen festen Ort wie den Boden oder die Decke gerichteten Kamera
- Berechnung der Geschwindigkeit durch visuelle Odometrie einer in den Raum gerichteten 3D-Kamera,
- Berechnung der Geschwindigkeit durch Positions- und Zeitdelta zweier Ortungs-Tags eines kartesischen 3D-Lokalisierungssystems.

Für das hier vorgeschlagene Prinzip können zwei beliebige Verfahren miteinander kombiniert werden. Voraussetzung für die Sicherheit ist, dass in beiden Kanälen physikalisch unterschiedliche Messprinzipien verwendet werden.

Diese Komponenten, bzw. die von den Komponenten ermittelten Daten, werden nun geeignet miteinander kombiniert, mit Hilfe der programmierbaren Steuerung, auf der entsprechende Software, sodass insgesamt eine sichere Ermittlung der aktuellen Geschwindigkeit möglich ist, und zwar ohne zusätzlichen Hardware-Einsatz.

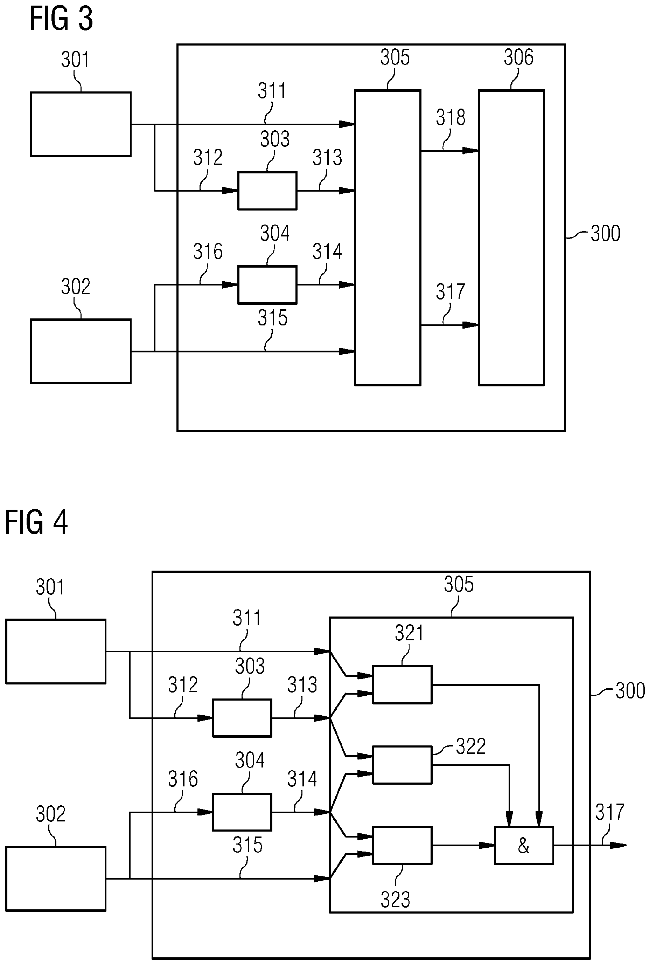

Figur 3 zeigt, wie die oben erwähnten Komponenten anzuordnen sind. Der optische Sensor, 301 (Laserscanner, ggf. auch mehrere Laserscanner (LS, LS1, LS2)) liefern in dem Ausführungsbeispiel zyklisch eine Punkwolke, 311, aller erfassten Hindernisse an ein Softwaremodul "Scan-Matcher", 303. Jede so erzeugte Punktwolke wird mit einem Zeitstempel versehen. Durch Vergleich mit der Punktwolke des letzten Zyklus berechnet der Scan-Matcher einen Geschwindigkeitsvektor 313 (x-Komponente, y-Komponente, sowie aktuelle Rotationsgeschwindigkeit w).

Gleichzeitig liefern z. B. ein Bewegungssensor 302 (Drehgeber, Encoder) die aktuellen Positionen der überwachten Achse oder Achsen des AGV an die Softwarekomponente 304 "Vorwärtstransformation". Durch Bezugnahme auf die Achspositionen des letzten Zyklus berechnet die Vorwärtstransformationen ebenfalls den Geschwindigkeitsvektor (vx, vy, w). Dabei wird die Bewegung der Fortbewegungseinrichtung 200 erfasst, indem isochron, insbesondere in Echtzeit, zu mindestens zwei Zeitpunkten mittels eines Drehgebers oder anderen Bewegungssensors jeweils eine Achsposition der Fortbewegungseinrichtung erfasst wird, und diese mit einem Zeitstempel versehen wird. Der Bewegungsvektor wird berechnet aus den zumindest zwei ermittelten Achspositionen relativ zu Zeitpunkten, durch eine Vorwärtstransformation 304.

Optischer Sensor, Bewegungssensor (Odometrie), Scanmatcher und Vorwärtstransformation müssen dabei nicht sicherheitsgerichtet implementiert sein. Insbesondere können dafür bereits existierende Komponenten verwendet werden.

Durch unabhängige und unterschiedliche Messverfahren werden die beiden einzelnen Geschwindigkeitsvektoren diversitär ermittelt bzw. berechnet, die nun verglichen werden sollen. Ein Fehler, der beide Kanäle betrifft, führt zu unterschiedlich falschen Ergebnissen, was durch den anschließenden Vergleich erkannt werden kann. Des Weiteren sind die Pfade der Berechnung software-technisch vollständig getrennt, können aber auf der gleichen Hardware laufen, so dass weitere Maßnahmen ergriffen werden müssen, um systematische Fehler in beiden Berechnungen zu erkennen

Beide diversitär berechneten Geschwindigkeitsvektoren, sowie die ursprünglichen Eingabedaten (beispielsweise die vom optischen Sensor ermittelte Punktwolke + die vom Bewegungssensor ermittelten Achsinkremente) werden an die sichere Diagnose 305 weitergegeben. Diese ist in sicherer Technik realisiert und führt eine Plausibilitäts- und Konsistenzprüfung durch. Ist die Prüfung erfolgreich, wird ein nun als sicherheitsgerichtet geltender Geschwindigkeitsvektor 316 ausgegeben, der für eine sicherheitsgerichtete Entscheidung 306 verwendet werden kann. Im Falle eines erkannten Fehlers wird der Ausgang "isValid" 317 gelöscht, und/oder es werden sichere Ersatzwerte geliefert (z. B. die maximal mögliche Geschwindigkeit Vmax, um somit die größten Schutzfelder zu aktivieren, siehe Fig. 1,).

Das System gilt als sicher, wenn entweder die tatsächliche Geschwindigkeit ausgegeben wird, oder der Ausgang "isValid" 317 gelöscht ist. Das System ist potentiell unsicher, wenn eine falsche Geschwindigkeit ausgegeben wird, und gleichzeitig der Ausgang "isValid" 317 gesetzt ist.

Um die Wahrscheinlichkeit einer potentiell unsicheren Ausgabe zu minimieren, werden folgende Diagnosemaßnahmen vorgeschlagen, die auf der Diagnoseeinheit 305 in sicherer Technik ausgeführt werden. Diese werden im Folgenden ausführlicher beschrieben:

Plausibilitäts-Check (PC) 321, 323
Kreuzvergleich (CC) 322
Diversitäre Koordinatensysteme, (DC)
Dynamisierung des Koordinatensystems, (DYC)
Sicheres Anfahren nach Stillstand (SVS)

1. Plausibilitätsprüfung, 321, 323, Plausibility Check (PC)

Die Plausibilitätsprüfung 321, 323 umfasst in einer vorteilhaften Ausführungsform zumindest eine der folgenden Prüfungen:

- die ermittelte Geschwindigkeit befindet sich in einem zuvor festgelegten Wertebereich,
- die ermittelte Beschleunigung befindet sich in einem zuvor festgelegten Wertebereich,
- in den ermittelten Werten ist ein Rauschen vorhanden,

die ermittelte Bewegung entspricht einem erwarteten Bewegungsmuster.

Beide Eingangs-Kanäle 311, 315 werden vorteilhafterweise unabhängig voneinander auf Plausibilität geprüft, siehe auch die Darstellung in Figur 4. Im Detail können z. B. folgende Prüfungen implementiert werden:
Liegt die ermittelte Geschwindigkeit des AMR im spezifizierten Bereich, z. B. ist sie kleiner als die Höchstgeschwindigkeit Vmax des AMRs? Dadurch können grobe Fehler, wie das Vertauschen der Geschwindigkeit mit einem anderen Prozesswert, erkannt werden.

Durch Bildung der ersten Ableitung kann bestimmt werden, ob die Beschleunigung bzw. Verzögerung in einem spezifizierten Bereich liegt. Im fehlerfreien Fall kommt es beispielsweise aufgrund der Massenträgheit nicht vor, dass die Geschwindigkeit plötzlich und unerwartet auf den Wert Null fällt. So kann in vorteilhafter Weise ganz einfach der Ausfall eines Sensors erkannt werden.

Im fehlerfreien Fall wird in den ursprünglichen Messwerten von optischem und/oder Bewegungssensor (z. B. Punktwolke bzw. Achsinkremente) außerdem jeweils ein Rauschen erkennbar sein, d. h. es gibt immer eine gewissen Diskrepanz zwischen den Messergebnissen zu verschiedenen Zeitpunkten. Falls dies nicht der Fall ist, so wird dies ebenfalls als Ausfall des jeweiligen Sensors gewertet (eingefrorener Sensor).

Im laufenden Betrieb fahren AMRs nur kurz mit konstanter Geschwindigkeit, da sie an Ecken abbremsen, abbiegen und dann wieder beschleunigen. Ändert sich die Geschwindigkeit eines Kanals über längere Zeit nicht wesentlich, wird ebenfalls angenommen, dass der Sensor eingefroren ist.

Der Ausfall von Uhren, die im Laserscanner zur Erzeugung von Zeitstempeln verwendet werden, kann durch einen Vergleich mit der fehlersicheren Uhr in der Diagnoseeinheit erkannt werden.

Alle Plausibilitätsprüfungen sind sicherheitsgerichtet implementiert. Mit einem Versagen der Tests selbst muss daher nicht gerechnet werden. Schlägt mindestens ein Test fehl, wird der Ausgang isValid, 317 gelöscht, bzw. es wird ein sicherer Ersatzwert als Geschwindigkeitsvektor geliefert.

2. Kreuzvergleich, 322, Cross-Check (CC)

Im einfachsten Fall besteht der Kreuzvergleich 322 aus drei paarweisen Vergleichen der Komponenten vx, vy, w des Geschwindigkeitsvektors. (also die Werte des ersten 313 und zweiten Bewegungsvektors 314) paarweise verglichen werden, sowie ggf der Drehwinkel). Deren Differenz muss betragsmäßig kleiner als ein zuvor abhängig von den technischen Eckdaten des überprüften AGV festgelegter Schwellwert t sein.

$$|vx1-vx2| < t1$$

$$|vy1-vy2| < t2$$

$$|w1-w2| < t3$$

Die Werte für t1, t2, t3 bestimmen gleichzeitig die Genauigkeit der ausgegebenen Geschwindigkeit im fehlerfreien Fall.

In einer vorteilhaften Ausgestaltung wird der euklidische Abstand der von den beiden Kanälen gelieferten kartesischen Vektoren vx und vy berechnet, um die Genauigkeit zu erhöhen:

$$\text{sqrt } [(vx1-vx2)^2 + (vy1-vy2)^2] < t4$$

$$|w1-w2| < t3$$

In einer weiteren vorteilhaften Ausführungsform wird der schnellere Kanal gezielt gepuffert, um zu erreichen, dass Geschwindigkeiten verglichen werden, die von den Sensoren zum gleichen Zeitpunkt erfasst wurden. Da nicht damit gerechnet werden kann, dass beide Kanäle über eine identische Reaktionszeit verfügen

Geringe Messfehler in der Position können zu einem vergleichsweise großen Fehler in der berechneten Geschwindigkeit führen, was zu einem Rauschen im Geschwindigkeitswert führt. Dieses Rauschen lässt sich mittels Filterung (z. B. FIR-Filter) reduzieren, wobei berücksichtigt werden muss, dass diese Filterung die Reaktionszeit entsprechend verlängert.

Der Kreuzvergleich oder die Plausibilitätsprüfung 321, 323, sind in Gänze oder zumindest teilweise funktional sicher realisiert.

Der Kreuzvergleich selbst ist sicherheitsgerichtet implementiert (F-CPU), schlägt er fehl, wird der Ausgang *isValid* und damit die Aussage über die Gültigkeit 317 gelöscht.

Der Kreuzvergleich erkennt alle Fehler, die nur einen der beiden Kanäle betreffen.

3. Diversitäre Koordinatensysteme, Diverse Coordinate Systems (DC)

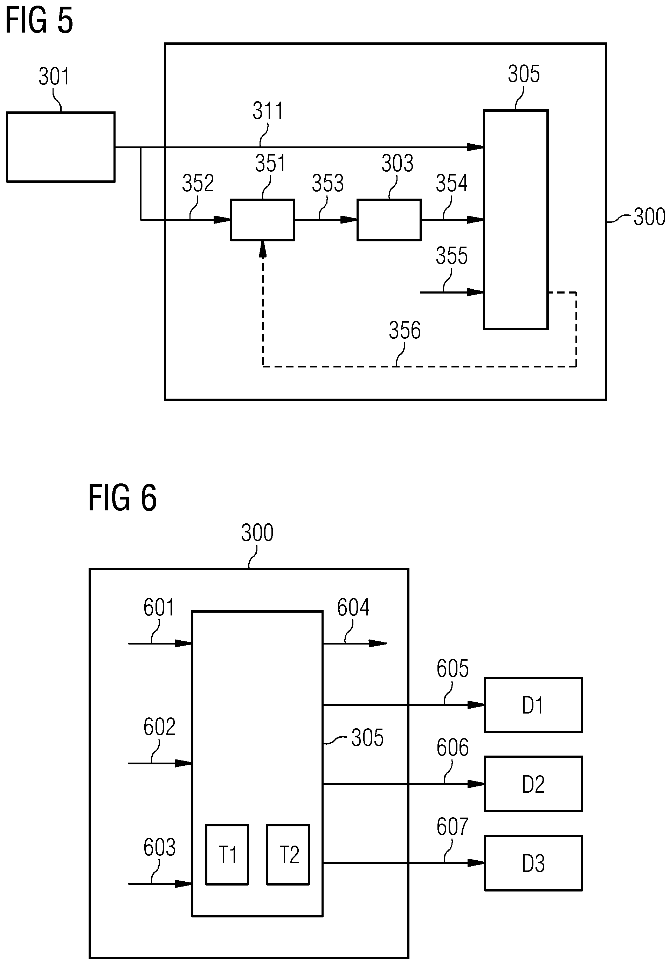

Figur 5 zeigt weitere vorteilhafte Ausführungsformen. Zufällige Hardwarefehler, die die Ausgabe des Scan-Matchers 303 und die Ausgabe der Vorwärtstransformation in gleicher Weise betreffen, könnten normalerweise durch einen Kreuzvergleich nicht aufgedeckt werden. Beispiel: würde der Wert vx in beiden Fällen durch denselben Wert überschrieben, kann dies durch den Kreuzvergleich nicht erkannt werden.

Daher werden die Sensordaten (Punktwolke) 311 von dem Sensor 301 vor einer Verarbeitung durch den Scanmatcher einer Koordinatensystemtransformation unterzogen. Diese kann beispielsweise bestehen aus:

- einer Verschiebung (Translation) aller Punkte um einen Vektor (tx, ty),
- einer Rotation aller Punkte um einen Punkt (rx, ry) um den Winkel $\alpha$,
- einer Skalierung aller Punkte entlang der X-Achse sx,
- einer Skalierung aller Punkte entlang der Y-Achse sy,
- einer Kombination der eben genannten Transformationen.

Die Transformationen können zeitunabhängig (konstant), oder zeitabhängig sein.

Eine zeitunabhängige Rotation um den Winkel $\alpha$ bewirkt dabei, dass das Ergebnis vx' vy' ebenfalls -immer - um den Winkel $\alpha$ gedreht interpretiert werden muss.

Eine zeitabhängige Transformation bedeutet, dass sich die Änderung über die Zeit verändert, also beispielsweise der Rotationswinkel immer größer wird. Beispielsweise bewirkt eine zeitabhängige Drehung um den Winkel $\alpha(t)$, dass w' um einen entsprechenden Wert erhöht interpretiert werden muss.

Die Transformation führt dazu, dass die Eingabe des Scan-Matchers 303 gezielt modifiziert wird. Die Modifikation wird von der Diagnoseeinheit 305 rückgängig gemacht, bevor der Kreuzvergleich durchgeführt wird.

Durch die gezielte Modifikation können zufällige Hardwarefehler, die die Ausgabe des Scan-Matchers und die Ausgabe der Vorwärtstransformation in gleicher Weise betreffen, durch den Kreuzvergleich erkannt werden. Beispiel: würde der Wert vx und vx' durch denselben Wert überschrieben, führt dies nach Rückgängigmachung der Modifikation zu einem unterschiedlichen Fehlersyndrom in den beiden Kanälen. Dies führt zu einer Erkennung im Kreuzvergleich.

4. Dynamisierung des Koordinatensystems, Dynamization of Coordinate Systems (DYC)

Figur 5 zeigt eine weitere Maßnahme die in der Dynamisierung des diversitären Koordinatensystems besteht. Dies bedeutet, dass sich das im Kanal 1 des Sensors 311 verwendete Koordinatensystem in regelmäßigen Zeitabständen ändert. Dadurch kann vorteilhafterweise ein Einfrieren oder eine unerwünschte Verzögerung in diesem Kanal sicher erkannt werden.

Die Diagnoseeinheit ändert, z. B. in fest eingestellten Zeitintervallen, die jeweils gültige Transformation. Diese kann anhand eine vorgegebene Rechenschemas oder auch zufällig ausgewählt werden.

Die Diagnoseeinheit sendet 356 die aktuell gültige Transformation τ laufend an den Modifikator 351. Zusätzlich wird eine Sequenznummer S mitgeschickt, die in allen folgenden Arbeitsschritten mitgereicht wird. Letztendlich gelangt das transformierte Ergebnis (vx' vy', w') gemeinsam mit der Sequenznummer S an die Diagnoseeinheit 305.

Die Sequenznummer gibt über die Art der aktuell verwendeten Koordinatensystemtransformation.

Aufgrund der Sequenznummer kann die Diagnoseeinheit entscheiden, welche Modifikation rückgängig gemacht werden muss.

Außerdem kann die Diagnoseeinheit anhand der Sequenznummer erkennen, ob am Eingang veraltete Daten anliegen, oder ob die Berechnung in Kanal unzulässig lange benötigt hat.

Durch die Dynamisierung des Koordinatensystems lassen sich z.B. unzulässige Verzögerungen bei der Berechnung im Scan-Matcher 303 erkennen.

5. Sicheres Anfahren nach Stillstand, Safe Vehicle Stop (SVS)

Figur 6 behandelt den Spezialfall, dass das Fahrzeug längere Zeit stillsteht. Dann kann es zu einer potentiell gefährlichen Akkumulation von Fehlern kommen. Beispielsweise könnte zunächst Kanal 1 (der erste Sensor) auf dem Wert null einfrieren. Da dies im Stillstand der Realität entspricht, kann dieser Fehler nicht erkannt werden. Friert nun Kanal 2 (der zweite Sensor) ebenfalls auf dem Wert null ein, wird immer noch kein Fehler erkannt. Beim nächsten Anfahren liefern aber beide Kanäle den falschen Wert null, was zu einem gefährlichen Fehler führen könnte (die Geschwindigkeit des Fahrzeugs wird unterschätzt).

Durch folgende Maßnahme wird dieses Fehlerszenario beherrscht:
Steht das Fahrzeug für eine bestimmte Zeit T1 still (z. B. T1 = 5 Sekunden), aktiviert die Diagnoseeinheit 305 an allen Achsen die sichere Stillstandsüberwachung. Beim Anfahren muss die Diagnoseeinheit über den Eingang "MovingOff" 601 informiert werden. In diesem Fall beendet die Diagnoseeinheit die sichere Stillstandsüberwachung und startet einen Zeitbegrenzer T2 (z. B. 3 Sekunden).

In einem ersten Kanal 602 können die Werte beispielsweise mittels eines dynamisierten Koordinatensystems erhalten werden, vx', vy', w', S. In einem zweiten Kanal 603 werden entsprechend die Koordinaten vx, vy, w in dem Beispiel empfangen.

Die Diagnoseeinheit prüft, ob tatsächlich ein Anfahren erfolgt. Ist dies der Fall, garantiert dies, dass sich während des Stillstands keine Fehler in beiden Kanälen akkumuliert haben. Läuft der Zeitbegrenzer T2 ab, bevor ein Anfahren festgestellt wird, könnte dies an einer Fehlerakkumulation in den Kanälen liegen. In diesem Fall wird der Ausgang "isValid" 604 gelöscht. Alternativ kann in diesem Fall auch die sichere Stillstandsüberwachung in den Achsen wieder aktiviert werden. Sollte sich das Fahrzeug tatsächlich unbemerkt in Bewegung gesetzt haben, wird es dadurch sicher gestoppt.

Entsprechende Befehle 605, 606, 607 werden an die Antriebseinheiten D1, D2, D3 gesendet.

## Patentansprüche

**1.** Verfahren zur sicherheitsgerichteten Geschwindigkeitsüberwachung einer autonomen Bewegungseinheit (100) mit

- zumindest einer Fortbewegungseinrichtung (200) mit einem Bewegungs-Erfassungssystem (ENC) und
- zumindest einem an der autonomen Bewegungseinheit (100) befindlichen Umgebungs-Erfassungssystem (LS),

bei dem

- mittels eines ersten Verfahrens (301) aus ersten Daten (311) der Bewegungseinheit (100), auf Basis von Messwerten des Bewegungs-Erfassungssystems (ENC) ein erster Bewegungsvektor (313) ermittelt wird,
- mittels eines zweiten Verfahrens (302) aus zweiten Daten (315), auf Basis von Messwerten des Umgebungs-Erfassungssystems (LS) ein zweiter Bewegungsvektor (314) der Bewegungseinheit ermittelt wird, und
- eine Prüfung des ersten (313) und zweiten Bewegungsvektors (314) mittels Kreuzvergleich (322) erfolgt und als Ergebnis eine Aussage über die Gültigkeit (317) sowie ein als sicherheitsgerichtet geltender Bewegungsvektor (316) ausgegeben wird.

**2.** Verfahren gemäß Patentanspruch 1,
**dadurch gekennzeichnet, dass**
das zweite Verfahren (302) zumindest einen optischen Sensor (LS, LS1, LS2) zum Abtasten der Umgebung (201, 202) verwendet.

3. Verfahren gemäß Patentanspruch 1 oder 2,
   **dadurch gekennzeichnet, dass**
   die optischen Sensoren (LS, LS1, LS2) eine eindimensionale, zweidimensionale oder dreidimensionale Erfassung durchführen.

4. Verfahren gemäß Patentanspruch 3,
   **dadurch gekennzeichnet, dass**
   es sich bei den optischen Sensoren um eine Kamera, eine Stereo-Kamera, einen insbesondere beweglich montierten Laser-Scanner oder einen Lidar handelt.

5. Verfahren gemäß einem der vorherigen Patentansprüche, **dadurch gekennzeichnet, dass**
   durch die optischen Sensoren (LS, LS1, LS2) beim Abtasten pro Abtastzyklus eine Punktwolke erzeugt wird, und jede so erzeugte Punktwolke mit einem Zeitstempel versehen wird.

6. Verfahren gemäß einem der vorherigen Patentansprüche, **dadurch gekennzeichnet, dass**
   das erste Verfahren (301) die Bewegung der Fortbewegungseinrichtung (200) erfasst, indem isochron, insbesondere in Echtzeit, zu mindestens zwei Zeitpunkten mittels eines Drehgebers (ENC) jeweils eine Achsposition der Fortbewegungseinrichtung erfasst wird, und diese mit einem Zeitstempel versehen wird.

7. Verfahren gemäß Patentanspruch 6,
   **dadurch gekennzeichnet, dass**
   der Bewegungsvektor berechnet wird aus den zumindest zwei ermittelten Achspositionen relativ zu Zeitpunkten, durch eine Vorwärtstransformation.

8. Verfahren gemäß einem der vorherigen Patentansprüche, **dadurch gekennzeichnet, dass**
   an den ersten Daten und/oder an den zweiten Daten eine Plausibilitätsprüfung (321, 323) durchgeführt wird.

9. Verfahren gemäß Patentanspruch 8,
   **dadurch gekennzeichnet, dass**
   die Plausibilitätsprüfung (321, 323) zumindest eine der folgenden Prüfungen umfasst:

   - die ermittelte Geschwindigkeit befindet sich in einem zuvor festgelegten Wertebereich,
   - die ermittelte Beschleunigung befindet sich in einem zuvor festgelegten Wertebereich,
   - in den ermittelten Werten ist ein Rauschen vorhanden,
   - die ermittelte Bewegung entspricht einem erwarteten Bewegungsmuster.

10. Verfahren gemäß Patentanspruch 3 oder 9,
    **dadurch gekennzeichnet, dass**
    der Kreuzvergleich oder die Plausibilitätsprüfung (321, 323) in Gänze oder teilweise funktional sicher realisiert sind.

11. Verfahren gemäß einem der vorherigen Patentansprüche, **dadurch gekennzeichnet, dass**
    die Plausibilitätsprüfung ein negatives Ergebnis erzeugt worauf die Aussage über die Gültigkeit (317) gelöscht wird.

12. Verfahren gemäß einem der vorherigen Patentansprüche, **dadurch gekennzeichnet, dass**
    bei dem Kreuzvergleich (322) die Werte des ersten (313) und zweiten Bewegungsvektors (314) paarweise verglichen werden, ob eine vorbestimmte Differenz betragsmässig überschritten wird.

13. Verfahren gemäß einem der vorherigen Patentansprüche, **dadurch gekennzeichnet, dass**

    - die mittels des ersten Verfahrens (301) aus den ersten Daten (311) in einer ersten Ermittlungsfrequenz ermittelt wird, und
    - die mittels des zweiten Verfahrens (302) aus zweiten Daten (315) in einer zweiten Ermittlungsfrequenz ermittelt wird, und

    die Daten zumindest des Verfahrens mit der höheren Frequenz gepuffert werden.

EP 4 286 973 A1

**14.** Verfahren gemäß einem der vorherigen Patentansprüche, **dadurch gekennzeichnet, dass**
die zweiten Daten (315) auf Basis von Messwerten des Umgebungs-Erfassungssystems (LS) vor einer Verarbeitung einer Koordinatensystemtransformation unterzogen werden und der resultierende Bewegungsvektor vor dem Kreuzvergleich einer Rücktransformation unterzogen wird.

**15.** Verfahren gemäß einem der vorherigen Patentansprüche, **dadurch gekennzeichnet, dass**
die zweiten Daten (315) auf Basis von Messwerten des Umgebungs-Erfassungssystems (LS) vor einer Verarbeitung mit einer Sequenznummer (356) erzeugt wird, welche Auskunft gibt über die Art der aktuell verwendeten Koordinatensystemtransformation.

**16.** Verfahren gemäß einem der vorherigen Patentansprüche,

wobei die autonomen Bewegungseinheit (100) nach einem Stillstand wieder angefahren werden soll,
**dadurch gekennzeichnet, dass**
überprüft wird, ob innerhalb eines vorgegebenen Zeitraums eine Änderung der Geschwindigkeit erfolgt ist, und wenn die Prüfung ein negatives Ergebnis erzeugt, die Aussage über die Gültigkeit (317) gelöscht wird.

**17.** Computerprogrammprodukt v zur Durchführung eines Verfahrens gemäß den Merkmalen eines der Patentansprüche 1 bis 16.

**18.** Vorrichtung zur sicherheitsgerichteten Geschwindigkeitsüberwachung einer autonomen Bewegungseinheit (100) mit

- zumindest einer Fortbewegungseinrichtung (200) mit einem Bewegungs-Erfassungssystem (ENC) wobei auf Basis von Messwerten des Bewegungs-Erfassungssystems (ENC) ein erster Bewegungsvektor (313) ermittelbar ist und
- zumindest einem an der autonomen Bewegungseinheit befindlichen Umgebungs-Erfassungssystem (LS), wobei aus zweiten Daten (315), auf Basis von Messwerten des Umgebungs-Erfassungssystems (LS) ein zweiter Bewegungsvektor (314) der Bewegungseinheit ermittelbar ist, und
- mit einer Diagnose-Einheit (305) zur Prüfung der ersten und zweiten Daten
- einer programmierbaren Steuerung zur Durchführung einer Prüfung des ersten (313) und zweiten Bewegungsvektors (315) mittels Kreuzvergleich (322) und
zum Treffen von sicherheitsgerichteten Entscheidungen für die Bewegungseinheit auf Basis eines von der Diagnose-Einheit erhaltenen Prüfungsergebnisses, wobei
als Ergebnis eine Aussage über die Gültigkeit (317) sowie ein als sicherheitsgerichtet geltender Bewegungsvektor (316) ausgebbar ist.

**19.** Vorrichtung gemäß Patentanspruch 18,
**dadurch gekennzeichnet, dass**
das Umgebungs-Erfassungssystem (LS) zumindest einen optischen Sensor zum Abtasten der Umgebung verwendet.

**20.** Vorrichtung gemäß Patentanspruch 18 oder 19,
**dadurch gekennzeichnet, dass**
die optischen Sensoren (LS, LS1, LS2) eine eindimensionale, zweidimensionale oder dreidimensionale Erfassung durchführen.

**21.** Vorrichtung gemäß Patentanspruch 19 oder 20,
**dadurch gekennzeichnet, dass**
es sich bei den optischen Sensoren um eine Kamera, eine Stereo-Kamera, einen insbesondere beweglich montierten Laser-Scanner oder einen Lidar handelt.

**22.** Vorrichtung gemäß einem der Patentansprüche 18 bis 21, **dadurch gekennzeichnet, dass**
durch der zumindest eine optische Sensor (LS) beim Abtasten pro Abtastzyklus eine Punktwolke erzeugt, und jede so erzeugte Punktwolke mit einem Zeitstempel versehbar ist.

**23.** Vorrichtung gemäß einem der vorherigen Patentansprüche 18 bis 22,
**dadurch gekennzeichnet, dass**

9

des Bewegungs-Erfassungssystems (ENC) durch ein erstes Verfahren (301) die Bewegung der Fortbewegungseinrichtung (200) erfasst, indem isochron, insbesondere in Echtzeit, zu mindestens zwei Zeitpunkten mittels eines Drehgebers (ENC) jeweils eine Achsposition der Fortbewegungseinrichtung erfasst wird, und diese mit einem Zeitstempel versehen wird.

24. Vorrichtung gemäß einem der vorherigen Patentansprüche 13 bis 18,
**dadurch gekennzeichnet, dass**
durch eine Recheneinheit (304) der Bewegungsvektor berechnet wird aus den zumindest zwei ermittelten Achspositionen relativ zu Zeitpunkten, durch eine Vorwärtstransformation.

25. Vorrichtung gemäß einem der vorherigen Patentansprüche 18 bis 24,
**dadurch gekennzeichnet, dass**
die Diagnose-Einheit (305) dazu eingerichtet ist, an den ersten Daten (311, 312) und/oder an den zweiten Daten (315, 316) eine Plausibilitätsprüfung (321, 323) durchzuführen.

26. Vorrichtung gemäß Patentanspruch 25,
**dadurch gekennzeichnet, dass**
die Diagnose-Einheit (305) dazu eingerichtet ist, die Plausibilitätsprüfung (321, 323) zumindest eine der folgenden Prüfungen umfasst:

- die ermittelte Geschwindigkeit befindet sich in einem zuvor festgelegten Wertebereich,
- die ermittelte Beschleunigung befindet sich in einem zuvor festgelegten Wertebereich,
- in den ermittelten Werten ist ein Rauschen vorhanden,
- die ermittelte Bewegung entspricht einem erwarteten Bewegungsmuster.

27. Vorrichtung gemäß einem der vorherigen Patentansprüche 18 bis 26,
**dadurch gekennzeichnet, dass**
der Kreuzvergleich oder die Plausibilitätsprüfung (321, 323) in Gänze oder teilweise funktional sicher realisiert sind.

28. Vorrichtung gemäß einem der vorherigen Patentansprüche 18 bis 27,
**dadurch gekennzeichnet, dass**
die Diagnose-Einheit (305) dazu eingerichtet ist, bei einem negativen Ergebnis der Plausibilitätsprüfung die Aussage über die Gültigkeit (317) zu löschen.

29. Vorrichtung gemäß einem der vorherigen Patentansprüche 18 bis 28,
**dadurch gekennzeichnet, dass**
die Diagnose-Einheit (305) dazu eingerichtet ist, für den Kreuzvergleich (322) die Werte des ersten (313) und zweiten Bewegungsvektors (314) paarweise zu vergleichen, und zu überprüfen, ob eine vorbestimmte Differenz betragsmässig überschritten wird.

30. Vorrichtung gemäß einem der vorherigen Patentansprüche 18 bis 29,
**dadurch gekennzeichnet, dass**

- mittels Umgebungs-Erfassungssystem (LS) erfassten ersten Daten (311) in einer ersten Ermittlungsfrequenz ermittelt werden, und
- mittels Bewegungs-Erfassungssystem (ENC) erfassten zweiten Daten (315) in einer zweiten Ermittlungsfrequenz ermittelt werden, und

die Diagnose-Einheit (305) dazu eingerichtet ist, die Daten zumindest des Verfahrens mit der höheren Frequenz zu puffern.

31. Vorrichtung gemäß einem der vorherigen Patentansprüche 18 bis 30,
**dadurch gekennzeichnet, dass**
die Recheneinheit (304) dazu eingerichtet ist, die zweiten Daten (315) auf Basis von Messwerten des Umgebungs-Erfassungssystems (LS) vor einer Verarbeitung einer Koordinatensystemtransformation zu unterziehen.

32. Vorrichtung gemäß Patentanspruch 31,
**dadurch gekennzeichnet, dass**

die Diagnose-Einheit (305) dazu eingerichtet ist, eine Sequenznummer zu erzeugen, auf Basis von Messwerten des Umgebungs-Erfassungssystems (LS) vor einer Verarbeitung, welche Auskunft gibt über die Art der aktuell verwendeten Koordinatensystemtransformation.

33. Vorrichtung gemäß einem der vorherigen Patentansprüche 18 bis 32,

wobei die autonomen Bewegungseinheit (100) nach einem Stillstand wieder angefahren werden soll,
**dadurch gekennzeichnet, dass**
die Diagnose-Einheit (305) dazu eingerichtet ist, zu überprüfen, ob innerhalb eines vorgegebenen Zeitraums eine Änderung der Geschwindigkeit erfolgt ist, und wenn die Prüfung ein negatives Ergebnis erzeugt, die Aussage über die Gültigkeit (317) zu löschen.

FIG 1

FIG 2

FIG 3

FIG 4

## FIG 5

301

311

305

300

352    351    353    303    354

355

356

## FIG 6

300

601    604

602    305    605    D1

606    D2

603    T1    T2    607    D3

Europäisches
Patentamt

European
Patent Office

Office européen
des brevets

**EUROPÄISCHER RECHERCHENBERICHT**

**Nummer der Anmeldung**

**EP 22 17 7019**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2019 111642 B3 (SICK AG [DE]) 4. Juni 2020 (2020-06-04) * Absätze [0007], [0008], [0017], [0022], [0024], [0025], [0026], [0028], [0029], [0043], [0044], [0045], [0047] * ----- | 1-33 | INV. G05D1/02 |

**RECHERCHIERTE SACHGEBIETE (IPC)**

**G05D**

Der vorliegende Recherchenbericht wurde für alle Patentansprüche erstellt

| Recherchenort | Abschlußdatum der Recherche | Prüfer |
|---|---|---|
| München | 13. Oktober 2022 | Pöllmann, H |

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 22 17 7019

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2022

| Im Recherchenbericht angeführtes Patentdokument | Datum der Veröffentlichung | Mitglied(er) der Patentfamilie | Datum der Veröffentlichung |
|---|---|---|---|
| DE 102019111642 B3 | 04-06-2020 | CN 111891123 A | 06-11-2020 |
| | | DE 102019111642 B3 | 04-06-2020 |
| | | DK 3736607 T3 | 16-08-2021 |
| | | EP 3736607 A1 | 11-11-2020 |
| | | ES 2884035 T3 | 10-12-2021 |
| | | JP 7062718 B2 | 06-05-2022 |
| | | JP 2020184334 A | 12-11-2020 |
| | | US 2020355830 A1 | 12-11-2020 |

Für nähere Einzelheiten zu diesem Anhang : siehe Amtsblatt des Europäischen Patentamts, Nr.12/82

EPO FORM P0461